# EUROPEAN PATENT APPLICATION

(11) **EP 2 787 428 A1**
(43) Date of publication of application: **08.10.2014**
(21) Application number: 14161195.4
(22) Date of filing: 21.03.2014
(51) Int. Cl.: G06F 3/0488, G06F 3/0482, G06F 3/0484, G06F 3/0486, G06F 3/16, G01C 23/00

(54) **Avionic touchscreen control systems and program products having no look control selection feature**

(30) Priority: 05.04.2013 US 201313857263
(71) Applicant: Honeywell International Inc., Morristown, NJ 07962-2245 (US)
(72) Inventor: Rogers, William, Morristown, NJ New Jersey 07962-2245 (US)
(74) Representative: Houghton, Mark Phillip

(57) **Abstract**

A system and method for selecting one of a plurality of buttons on a touchscreen, each button being associated with a separate function, comprises capturing a movable mask at a predetermined position on the touchscreen by touching the mask, and navigating on the touchscreen with the mask in search of the button. Feedback is generated when the mask is positioned over the button to identify the function, after which the button may be selected to activate the function.

## Description

### TECHNICAL FIELD

The present invention relates generally to aircraft control systems and, more particularly, to avionic touchscreen control systems enabling high integrity selection of virtual aircraft controls in low or zero visibility conditions.

### BACKGROUND

Aircraft are increasingly equipped with touchscreen control systems, which can be utilized to control various systems onboard the aircraft. As compared to physical discrete controls, such as an array of buttons, switches, knobs, and the like, such touchscreen control systems reduce hardware cost and complexity and provide an interactive, highly adaptable visual layout. The integration of touchscreen control systems into an aircraft environment does, however, present several challenges in instances wherein such systems are intended to control critical operations or functions of the aircraft. For example, it may be necessary or at least desirable to design avionic touchscreen control systems to discriminate between touch inputs intentionally provided by an aircrew member from inadvertent touch inputs, which can occur in highly turbulent conditions. Similarly, the ability of a pilot or other aircrew member to view and use a touchscreen display may be impaired or entirely prevented in low or zero light and/or when smoke is present in the aircraft cockpit. A pilot's view of a touchscreen display may also be less reliable under highly turbulent conditions or under high workload conditions. In such instances, physical aircraft controls, which can be located and operated with some degree of certainty by touch alone, may be preferable to conventional touchscreen control systems, which typically do not provide convenient means to locate and interact with the virtual aircraft controls when visibility in the cockpit is impaired. In addition, the use of, for example, a simple sliding on swipe gesture in a low light environment may result in an inadvertent and unwanted alteration of the current display page; e.g. an underlying map display. That is, it may result in a change in the lateral map (LMAP) display, or an unwanted scroll of an underlying menu.

It would thus be desirable to provide embodiments of an avionic touchscreen control system including a "no look" control selection feature enabling high integrity selection of virtual aircraft controls in low or zero visibility condition. Other desirable features and characteristics of the present invention will become apparent from the subsequent Detailed Description and the appended Claims, taken in conjunction with the accompanying Drawings and the foregoing Background.

### BRIEF SUMMARY

The present disclosure is directed to a movable mask-based system that selectively enables a desired function associated with a button on a touchscreen display device, the system being particularly suitable for use in a low or zero-light environment.

In an exemplary, non-limiting environment, there is provided a method for selecting one of a plurality of buttons on a touchscreen, each button associated with a separate function. The method comprises capturing a movable mask at a position on the touchscreen by touching the mask, and navigating the touchscreen by dragging the mask in search of the one of the plurality of buttons. Feedback is generated when the mask is positioned over the one of the plurality of buttons. The one of the plurality of buttons is then selected to activate the specific function.

In a further exemplary, non-limiting embodiment, there is provided an avionics touchscreen control system, comprising a touchscreen display device, a touch sensor coupled to the display device and configured to detect touch input thereon, a non-visual feedback generator, and a controller coupled to the display device, to the touch sensor, and to the non-visual feedback generator. The controller configured to generate on the display a graphical representation of a first virtual aircraft control and a movable mask, monitor touch-and-drag input of the mask, and move the mask in accordance with the touch-and-drag input. The non-visual feedback generator produces a non-visual indication that the mask is positioned over the first virtual aircraft control.

In a still further exemplary, non-limiting environment, there is provided a method for selecting a control button on a touchscreen display to activate a control function. The method comprises activating a moveable mask at a home position on the touchscreen display, searching the touchscreen by touching and dragging the mask until it covers the control function, releasing the digit from the mask, which activates the function and returns the mask to the home position.

Furthermore, other desirable features and characteristics of the "no look" touchscreen display user interfaces will become apparent from the subsequent detailed description and the appended claims, taken in conjunction with the accompanying drawings and the preceding background.

### BRIEF DESCRIPTION OF THE DRAWINGS

The present disclosure will hereinafter be described in conjunction with the following figures, wherein like numerals denote like elements, and:
FIG. 1 is a block diagram of an aircraft system including a touchscreen display;
FIG. 2 is a frontal view of a touchscreen in accordance with an exemplary embodiment;
FIG. 3 is a frontal view of a touchscreen in accordance with an exemplary embodiment;
FIG. 4 is a frontal view of a touchscreen in accordance with an exemplary embodiment;
FIG. 5 is a frontal view of a touchscreen in accordance with an exemplary embodiment;
FIG. 6 is a frontal view of a touchscreen in accordance with an exemplary embodiment; and
FIG. 7 is a flow chart of a "no look" method for locating a button on a touchscreen in a low or zero visibility environments to activate a function associated therewith.

### DETAILED DESCRIPTION

The following detailed description is merely illustrative in nature and is not intended to limit the embodiments of the subject matter or the application and uses of such embodiments. Any implementation described herein as exemplary is not necessarily to be construed as preferred or advantageous over other implementations. Furthermore, there is no intention to be bound by any expressed or implied theory presented in the preceding technical field, background, brief summary, or the following detailed description.

Techniques and technologies may be described herein in terms of functional and/or logical block components and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

For the sake of brevity, conventional techniques related to graphics and image processing, touchscreen displays, and other functional aspects of certain systems and subsystems (and the individual operating components thereof) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

The present disclosure is directed to a touch-and-drag mask (also referred to as an anchor widget) system and method that enables a function on a touchscreen display device to enhance and improve user experience, reduce interaction errors, and improve accuracy in a low or zero light environment. The touch-and-drag mask element described herein can be designed by a developer or a user to suit the needs of any implementation on which the novel system and methods presented herein are employed.

The presently described touch-and-drag user interface display and method is designed to operate in conjunction with, and as an extension of, the touchscreen device and method disclosed in commonly assigned U.S. Patent Application 13/162,679, titled "TOUCHSCREEN AND METHOD FOR PROVIDING STABLE TOUCHES," filed June 17, 2011. As such, U.S. Patent Application 13/162,679 is expressly incorporated by reference into the present disclosure in its entirety as if set forth fully herein. The presently described touchscreen user interface display and method provide features extending the aforementioned patent application that improve the usability and efficiency of touch panels and touch accuracy. A "mask" over a normally touched area on a user interface display, which can be embodied in various forms including, but not limited to virtual keyboards, smartphones, and other touch-based input devices for use in various industrial, commercial, aviation, and consumer electronics applications, is used to define an area where gestures can be interpreted for some control functions. As such, a virtual interface is disclosed that employs logic that activates and deactivates regions under a movable mask in a low/zero light environments. These and other features will be described in greater detail herein.

The method and touchscreen display user interface of the exemplary embodiments may be used in any type of electronic device that employs a touchscreen display user interface. For example, the exemplary embodiments described herein may be employed in applications including, but not limited to, vehicles and heavy machinery, small handheld mobile devices such as smart phones, aircraft systems such as cockpit displays and other aviation implementations, and various other industrial, commercial, aviation, and consumer electronics-based implementations. Other exemplary implementations will be apparent to those having ordinary skill in the art. As such, the example implementations presented herein are provided as non-limiting guideposts for the personal having ordinary skill in the art to implement other rules and functions as may be desirable in any given application.

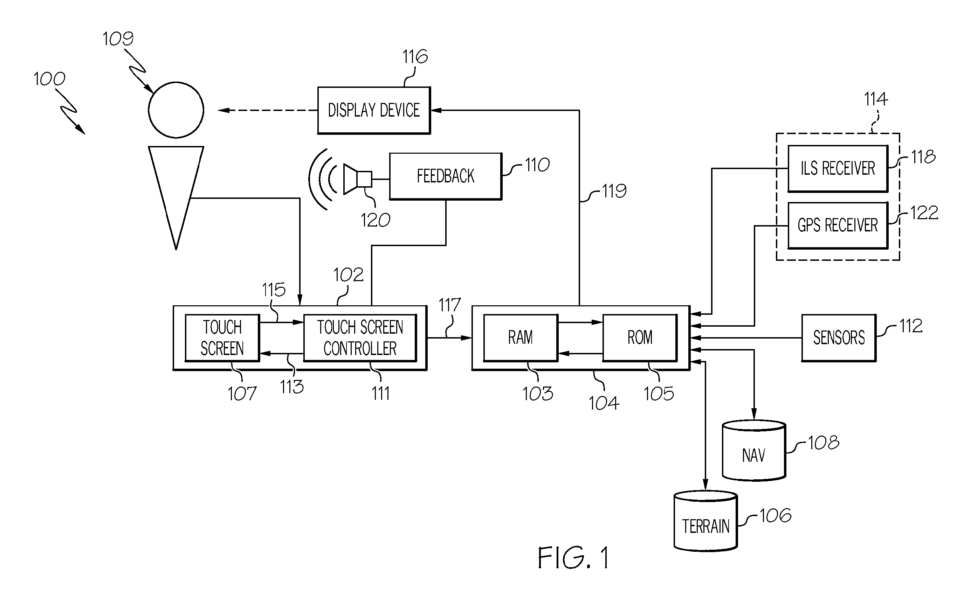

Though the method and touchscreen of the exemplary embodiments may be used in any type of electronic device, its use in an aircraft system is described as an example. Referring to FIG. 1, a flight deck display system 100 includes a user interface 102, a processor 104, one or more terrain databases 106 sometimes referred to as a Terrain Avoidance and Warning System (TAWS), one or more navigation databases 108, sensors 112, external data sources 114, and one or more display devices 116. The user interface 102 is in operable communication with the processor 104 and is configured to receive input from a user 109 (e.g., a pilot) and, in response to the user input, supplies command signals to the processor 104. The user interface 102 may be any one, or combination, of various known user interface devices including, but not limited to, one or more buttons, switches, or knobs (not shown). In the depicted embodiment, the user interface 102 includes a touchscreen 107 and a touchscreen controller 111. The touchscreen controller 111 provides drive signals 113 to a touchscreen 107, and a sense signal 115 is provided from the touchscreen 107 to the touchscreen controller 111, which periodically provides a controller signal 117 of the determination of a touch to the processor 104. Touchscreen controller is also coupled to feedback generator 110 for providing an audible or haptic feedback via an annunciator 120 as will be more fully described below. The processor 104 interprets the controller signal 117, determines the application of the digit on the touchscreen 107, and provides, for example, a controller signal 117 to the touchscreen controller 111 and a signal 119 to the display device 116. Therefore, the user 109 uses the touchscreen 107 to provide an input as more fully described hereinafter.

The processor 104 may be implemented or realized with a general purpose processor, a content addressable memory, a digital signal processor, an application specific integrated circuit, a field programmable gate array, any suitable programmable logic device, discrete gate or transistor logic, discrete hardware components, or any combination designed to perform the functions described herein. A processor device may be realized as a microprocessor, a controller, a microcontroller, or a state machine. Moreover, a processor device may be implemented as a combination of computing devices, e.g., a combination of a digital signal processor and a microprocessor, a plurality of microprocessors, one or more microprocessors in conjunction with a digital signal processor core, or any other such configuration. In the depicted embodiment, the processor 104 includes on-board RAM (random access memory) 103, and on-board ROM (read-only memory) 105. The program instructions that control the processor 104 may be stored in either or both the RAM 103 and the ROM 105. For example, the operating system software may be stored in the ROM 105, whereas various operating mode software routines and various operational parameters may be stored in the RAM 103. The software executing the exemplary embodiment is stored in either the ROM 105 or the RAM 103. It will be appreciated that this is merely exemplary of one scheme for storing operating system software and software routines, and that various other storage schemes may be implemented.

The memory 103, 105 may be realized as RAM memory, flash memory, EPROM memory, EEPROM memory, registers, a hard disk, a removable disk, a CD-ROM, or any other form of storage medium known in the art. In this regard, the memory 103, 105 can be coupled to the processor 104 such that the processor 104 can be read information from, and write information to, the memory 103, 105. In the alternative, the memory 103, 105 may be integral to the processor 104. As an example, the processor 104 and the memory 103, 105 may reside in an ASIC. In practice, a functional or logical module/component of the display system 100 might be realized using program code that is maintained in the memory 103, 105. For example, the memory 103, 105 can be used to store data utilized to support the operation of the display system 100, as will become apparent from the following description.

No matter how the processor 104 is specifically implemented, it is in operable communication with the terrain databases 106, the navigation databases 108, and the display devices 116, and is coupled to receive various types of inertial data from the sensors 112, and various other avionics-related data from the external data sources 114. The processor 104 is configured, in response to the inertial data and the avionics-related data, to selectively retrieve terrain data from one or more of the terrain databases 106 and navigation data from one or more of the navigation databases 108, and to supply appropriate display commands to the display devices 116. The display devices 116, in response to the display commands, selectively render various types of textual, graphic, and/or iconic information.

The terrain databases 106 include various types of data representative of the terrain over which the aircraft is flying, and the navigation databases 108 include various types of navigation-related data. The sensors 112 may be implemented using various types of inertial sensors, systems, and or subsystems, now known or developed in the future, for supplying various types of inertial data, for example, representative of the state of the aircraft including aircraft speed, heading, altitude, and attitude. The ILS 118 provides aircraft with horizontal (or localizer) and vertical (or glide slope) guidance just before and during landing and, at certain fixed points, indicates the distance to the reference point of landing on a particular runway. The GPS receiver 124 is a multi-channel receiver, with each channel tuned to receive one or more of the GPS broadcast signals transmitted by the constellation of GPS satellites (not illustrated) orbiting the earth. The touch panel might control radios, flight planning, electronic flight bags, aircraft system, etc. The function might also just be a navigation function going from page to page on the touch screen menu. The sources of data might also be from ground communication, electronic information storage systems, radio management units, maintenance computer, etc.

The display devices 116, as noted above, in response to display commands supplied from the processor 104, selectively render various textual, graphic, and/or iconic information, and thereby supplies visual feedback to the user 109. It will be appreciated that the display device 116 may be implemented using any one of numerous known display devices suitable for rendering textual, graphic, and/or iconic information in a format viewable by the user 109. Non-limiting examples of such display devices include various cathode ray tube (CRT) displays, and various flat screen displays such as various types of LCD (liquid crystal display) and TFT (thin film transistor) displays. The display devices 116 may additionally be implemented as a screen mounted display, or any one of numerous known technologies. It is additionally noted that the display devices 116 may be configured as any one of numerous types of aircraft flight deck displays. For example, it may be configured as a multi-function display, a horizontal situation indicator, or a vertical situation indicator, just to name a few. In the depicted embodiment, however, one of the display devices 116 is configured as a primary flight display (PFD).

In operation, the display device 116 is also configured to process the current flight status data for the host aircraft. In this regard, the sources of flight status data generate, measure, and/or provide different types of data related to the operational status of the host aircraft, the environment in which the host aircraft is operating, flight parameters, and the like. In practice, the sources of flight status data may be realized using line replaceable units (LRUs), transducers, accelerometers, instruments, sensors, and other well-known devices. The data provided by the sources of flight status data may include, without limitation: airspeed data; groundspeed data; altitude data; attitude data, including pitch data and roll data; yaw data; geographic position data, such as GPS data; time/date information; heading information; weather information; flight path data; track data; radar altitude data; geometric altitude data; wind speed data; wind direction data; etc. The display device 116 is suitably designed to process data obtained from the sources of flight status data in the manner described in more detail herein.

There are many types of touchscreen sensing technologies, including capacitive, resistive, infrared, surface acoustic wave, and embedded optical. Some touch technologies comprise overlays on existing displays and some are built in. These are referred to as "in cell." The concepts described herein apply whether the touch screen is enabled by a single touch or multiple touches. All of these technologies sense touch on a screen. A touchscreen is disclosed having a plurality of buttons, each configured to display one or more symbols. A button as used herein is a defined visible location on the touchscreen that encompasses the symbol(s). Symbols as used herein are defined to include alphanumeric characters, icons, signs, words, terms, and phrases, either alone or in combination. A particular symbol is selected by sensing the application (touch) of a digit, such as a finger or a stylus, to a touch-sensitive object associated with that symbol. A touch-sensitive object as used herein is a touch-sensitive location that includes a button and may extend around the button. Each button including a symbol has a touch-sensing object associated therewith for sensing the application of the digit or digits.

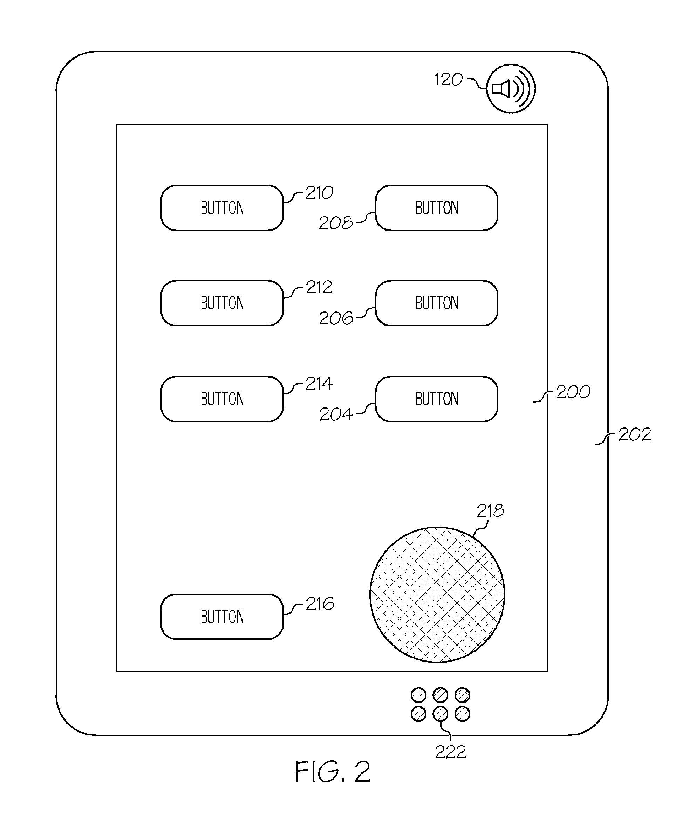

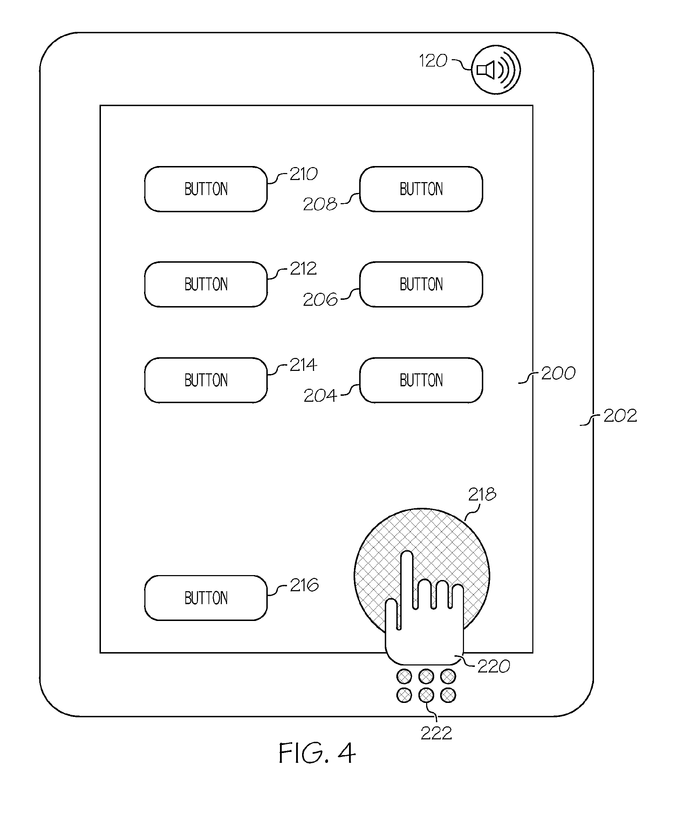

Referring to FIG. 2 and in accordance with an exemplary embodiment, there is shown a touchscreen 200 in an enclosure 202; e.g. a cabinet, frame, bezel etc. As can be seen, touchscreen 200 includes a plurality of buttons 204, 206, 208, 210, 212, 214, and 216 each representing a different function. While shown as comprising two columns, is should be clear that the number and arrangement of buttons may be varied to suit different applications. Also shown is a touch-and-drag movable mask 218 (sometimes referred to as an anchor widget) that may be captured by a use's finger, stylus, or the like 220 (shown in FIG. 4) such that the mask will move with and beneath the finger or stylus 220 as will be further described below.

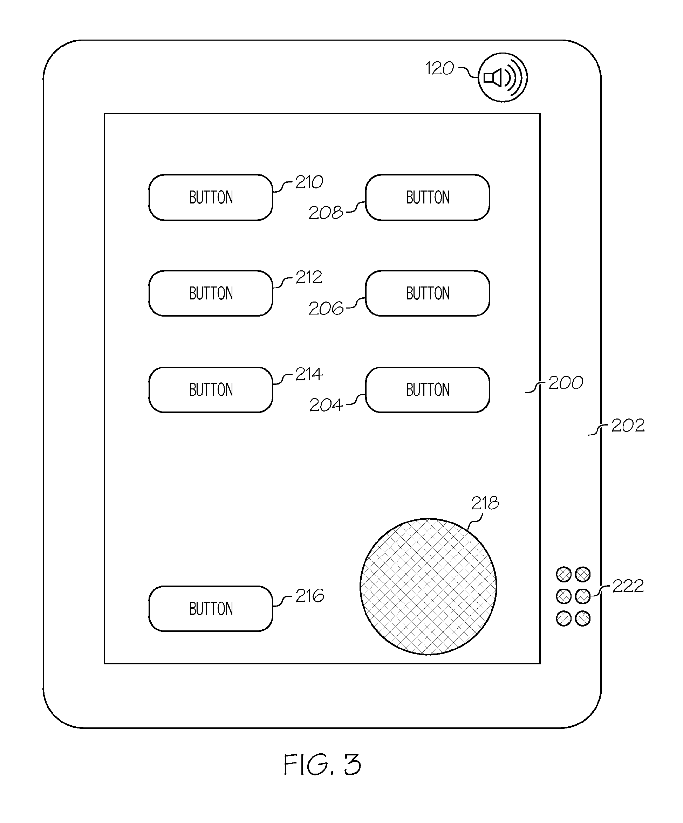

As previously stated, the touchscreen display shown in FIGS. 1 and 2 is intended to be suitable for use in low and zero-visibility environments. Thus, while mask 218 will reside and always return to a predetermined location after use (e.g. lower right corner as shown in FIG. 2), it is also desirable to provide a mechanism for assisting a crew member in locating mask 218. This may be accomplished by providing an area on enclosure 202 with a region 222 that may be identified by touch when visibility becomes an issue. For example, region 222 may be characterized by a plurality of raised nubs as shown FIG. 1. Of course, other methods may be employed such as using a single raised region, a plurality of indentations, a single indentation, etc. Furthermore, this identifying region for locating movable mask 218 may be placed in other locations as long as its position is known relative to that of movable mask 218 so as to permit reliable and quick capture of mask 218. For example, FIG. 3 shows region 222 positioned alongside mask 218 on enclosure 202 as opposed to at the bottom beneath mask 218. Finally, with respect to FIG. 2, since the display system is intended for use in low or zero visibility, a mechanism is needed to inform the user of when the touch-and-drag movable mask has captured (i.e. resides over) a button. Thus, an annunciator 120 (illustrated as a speaker in FIGS. 1-5) for providing feedback to the user identifying the button over which mask 218 is positioned. It should be clear that many forms of feedback may be used for this purpose, either singly or in combination; i.e. sound, speech, haptic, etc. Similarly, feedback may be provided via annunciator 120 when a user has taken control (i.e. captured the movable mask by a finger, stylus or the like). This feedback function could also include the name of the page or screen that is active (e.g., main menu page, map display, radio tuning page, etc.) in case the operator can't see the screen and doesn't remember what page was being displayed. This situation is shown in FIG. 4. In this case, and for purposes of illustration only, mask 212 is shown as having been captured by one or more fingers of hand 220.

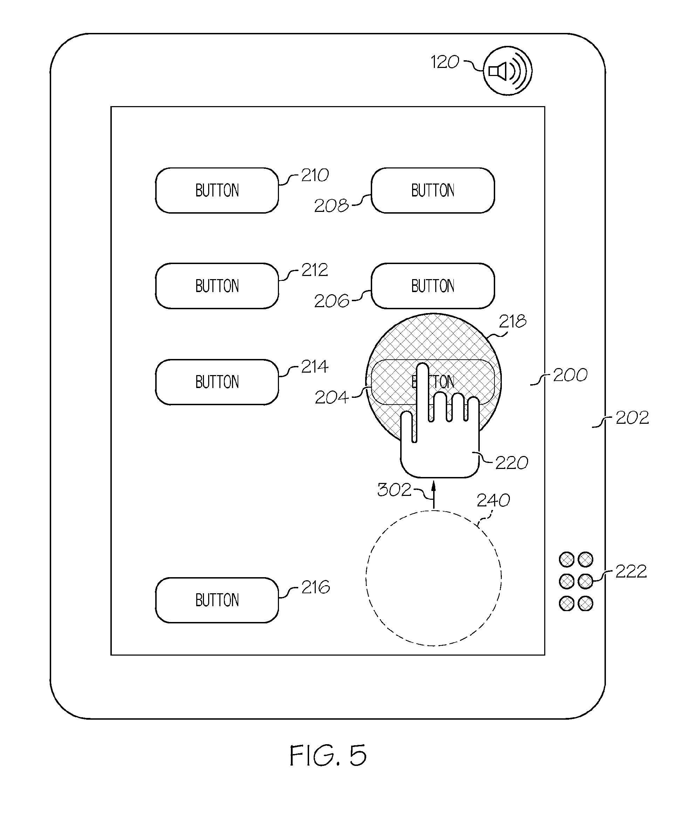

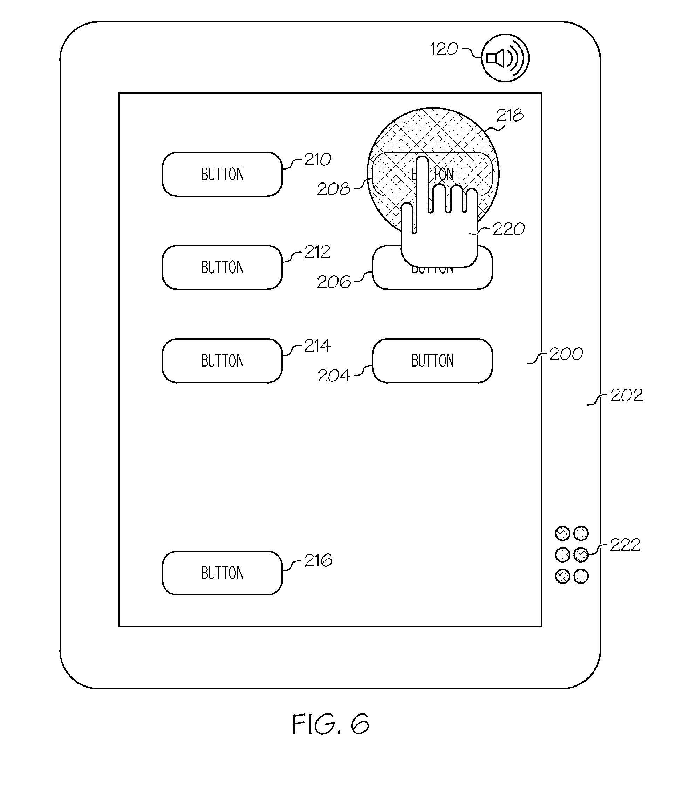

Referring to Figure 5, assume that the user desires to execute the function associated with button 208 but is not sure which button corresponds to that function due to poor visibility. The user begins by first locating movable mask as previously described and dragging it from its home position 240 in the direction of, for example, arrow 302 until it captures (e.g. covers) button 204 at which time feedback (e.g. verbal) will be generated identifying button 204. If this is not the desired button or function, the user will continue searching by, for example, locating and capturing button 206. In the same manner, the function associated with button 206 will be announced. Assuming once again that this is not the desired button/function, the user may continue the select-and-drag journey, for example, upward until button 208 is captured as shown FIG. 6. The function associated with button 206 will be announced as previously described. Assuming that the function of button 208 is the desired function, the function is selected by removing contact of the fingers, stylus, etc. with the touchscreen at which time, mask 218 returns to its home position shown in FIG. 2. The above described drag-and-search process continues until the desired button is captured. Each time the mask completely covers one of the buttons, the controller may be configured to highlight the covered function button which may be beneficial in a low visibility environment in addition to the annunciation feedback. In some cases, the button selection may result in navigation to another page, activate a function, or provide data to a system.

In some cases, the plurality of buttons may visually reside on a display that may be a moving display such as a moving map display, a menu that may be scrolled, a page that may be turned, etc. In such cases, if a finger were to be swiped or dragged across the touchscreen, there may be an unwanted change in the visually underlying base display; e.g. the map may be moved. The use of the movable drag-and-search process utilizing a movable mask as described herein prevents this from happening and maintains the stability of the underlying display.

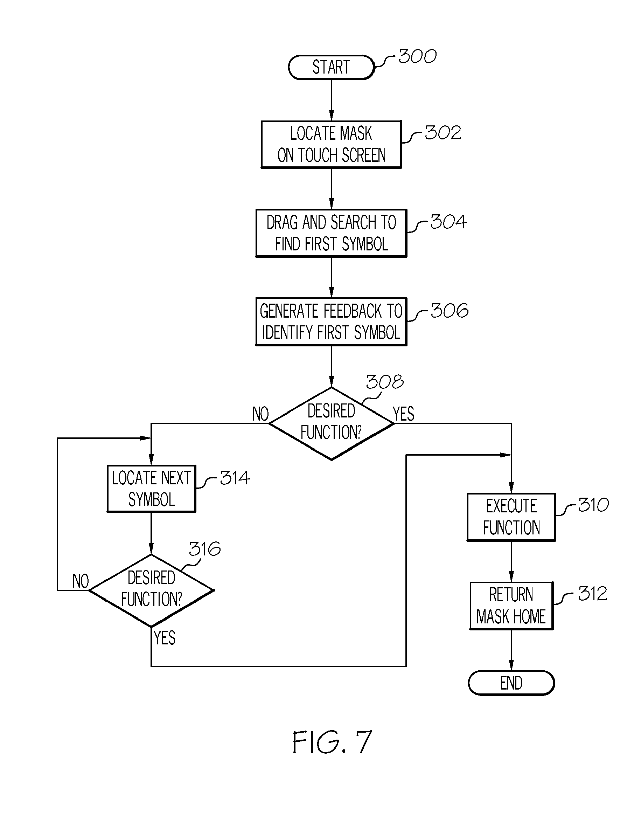

FIG. 7 is a flow chart of a method 300 for utilizing a touchscreen in a low or zero-visibility environment while maintaining the stability of a movable display such as a moving map display that shares the same touchscreen with a plurality of selectable functions represented by symbols, icons, or the like. This is accomplished by means of a computer software protocol using a movable mask as previously described.

First, in STEP 302, the moveable mask, which always resides at a predefined position on the touchscreen, must be located. Feedback may be provided when the mask is contacted as previously described; this feedback may include annunciation of the page or screen that is active. A drag-and-search function is then performed (STEP 304) using the mask as a shield until feedback is received identifying a button that has been located (STEP 306). If the identity of the button corresponds to the desired function (STEP 308), the function is executed (STEP 312). If the desired function has not been located (STEP 308), the search continues (STEP 314) until the desired function is found (STEP 316). The desired function is executed, and the mask returns to its home position.

Thus, the use of the movable software based mask that can always be found at a predetermined home position eliminating the need to search for it in the dark. Feedback is provided (audio, haptic, or verbal) to inform the user that the mask has been captured. The mask can be moved anywhere on the touchscreen, and when it passes over or hovers over a button, feedback is again provided to inform the user to identify the button and its function. When the mask is released over a button, the function is activated, which is confirmed by additional feedback. Upon release (i.e. separation from the touchscreen), the mask returns to its home position thus allowing the process to be repeated.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope of the invention as set forth in the appended claims.

## Claims

1. A method of selecting one of a plurality of buttons on a touchscreen, each button associated with a separate function, the method comprising:
capturing a movable mask at a position on the touchscreen by touching the mask;
navigating the touchscreen with the mask in search of the one of the plurality of buttons;
generating feedback when the mask is positioned over the one of the plurality of buttons; and
selecting the one of the plurality of buttons to activate the specific function.

2. The method of Claim 1 wherein the step of capturing comprises engaging the mask at a home position.

3. The method of Claim 2 further comprising indicating the location of the home position.

4. The method of Claim 3 further comprising returning the mask to the home position when the one of the plurality of buttons is selected.

5. The method of Claim 3 further comprising generating feedback when the mask is captured.

6. The method of Claim 1 further comprising highlighting each button as it is covered by the mask.

7. The method of Claim 1 wherein the feedback is audible.

8. The method of Claim 7 wherein the feedback is verbal so as to identify the button.

9. The method of Claim 7 wherein the feedback is haptic.

10. The method of Claim 3 wherein the touchscreen is housed in a cabinet and the means for locating includes at least one marker on the frame adjacent the home position.
